# EUROPEAN PATENT APPLICATION

(11) **EP 4 729 578 A1**
(43) Date of publication of application: **22.04.2026**
(21) Application number: 25209668.0
(22) Date of filing: 20.10.2025
(51) Int. Cl.: C08L 69/00

(54) **RECYCLED RESIN COMPOSITION, RESIN MOLDED PRODUCT, RESIN HOUSING, AND ELECTRONIC DEVICE**

(30) Priority: 21.10.2024 JP 2024184572
(71) Applicant: Konica Minolta, Inc., Tokyo 100-7015 (JP)
(72) Inventor: SAKIMURA, Tomoo, Tokyo, 100-7015 (JP); MAMINO, Masashi, Tokyo, 100-7015 (JP)
(74) Representative: MFG Patentanwälte Meyer-Wildhagen Meggle-Freund Gerhard PartG mbB

(57) **Abstract**

A recycled resin composition contains: a PCR material that contains a polycarbonate; and a core-shell impact modifier. The core-shell impact modifier contains a silicone rubber, and a content of a fluorine resin in the recycled resin composition is less than 1000 ppm.

## Description

### CROSS-REFERENCE TO RELATED APPLICATIONS

The entire disclosure of Japanese Patent Application No. 2024-184572 filed on October 21, 2024, is incorporated herein by reference in its entirety.

### BACKGROUND OF THE INVENTION

### TECHNICAL FIELD

The present disclosure relates to a recycled resin composition, a resin molded product, a resin housing, and an electronic device. More specifically, the present invention relates to a recycled resin composition, a resin molded product, a resin housing, and an electronic device that have high impact strength and excellent flame retardancy.

### DESCRIPTION OF RELATED ART

In recent years, PFAS regulations regarding products such as resin molded products have been strengthened, but many of the products contain hazardous substances such as fluorine resins like polytetrafluoroethylene. And such products are required to contain as little hazardous substances, such as fluorine resins, as possible. Hereinafter, "polytetrafluoroethylene" is abbreviated as "PTFE".

Here, resin molded products are required to have flame retardancy, and some resin molded products are required to meet a standard called V-0, which is a standard established by Underwriters Laboratories (UL) of the United States and used in the evaluation of the flame retardancy. Hereinafter, such a standard will be abbreviated as "V-0 standard".

In a resin molded product required to meet the V-0 standard, from the viewpoints of influence on the human body and environmental protection, a flame retardant or an anti-drip agent is often used to ensure flame retardancy during production of the resin molded product.

In order to ensure the flame retardancy, PTFE or a processed product thereof is basically used as the anti-drip agent, and a large amount of hazardous substances such as fluorine resins are contained in the resin molded product.

For example, for a housing of an electronic device, which is required to be excellent in both flame retardancy and impact strength, a technology as in JP H11-21441A is disclosed. In addition, as in JP 2000-103952A, a technique is disclosed in which a resin composition prepared using a PCR material containing a polycarbonate as a raw material is subjected to a treatment for preventing deterioration from initial performance. However, there remains room for improvement in these techniques.

### SUMMARY OF THE INVENTION

In the technique disclosed in JP H11-21441A, the flame retardancy and impact strength are improved by using a core-shell impact modifier containing a flame retardant and a silicone rubber in a polycarbonate. As the flame retardant, a phosphorus-based flame retardant is used. As the core-shell impact modifier containing a silicone rubber, a core-shell impact modifier containing, as a core, a silicone-acrylic composite rubber having a role of a flame-retardant aid in addition to a role of the impact modifier is used.

However, in the above-described techniques, in order to produce a housing of an electronic device meeting the V-0 standard, an anti-drip agent containing a hazardous substance such as a fluorine resin such as PTFE is required. Therefore, alternative techniques for ensuring the flame retardancy are required, but currently there is a lack of alternative technologies.

In addition, with respect to the production of resin molded products and the like, perspectives on biomass utilization and recycling are also crucial for achieving low carbonization. Alongside legal regulations and promotion measures, technological development is actively advancing, with the utilization of post-consumer recycled materials recovered after use being particularly important. Hereinafter, the "post-consumer recycled material" is also referred to as a "PCR material". Hereinafter, in the present specification, a recycled material used and recovered in the market is abbreviated as a "PCR material".

Here, in general, a product manufactured using a PCR material is greatly deteriorated from the initial performance in the product before becoming the PCR material, and thus the use of the PCR material is limited.

In the technique disclosed in JP 2000-103952A, the resin composition prepared using a PCR material containing a polycarbonate as a raw material is subjected to the treatment for preventing deterioration from the initial performance. Further, it is described that the resin composition in the above-mentioned technique can withstand an accelerated deterioration test and pulverization-remolding after containing a virgin resin as a raw material. Hereinafter, the "resin composition prepared using a PCR material containing a polycarbonate as a raw material" is also referred to as a "PCR polycarbonate resin composition".

However, in the above-described PCR polycarbonate resin composition, the deterioration from the initial performance is observed in practice, with a particularly noticeable decline in toughness functionality, rendering it impractical for real-world applications.

Currently, there are only a few techniques capable of enhancing the performance of the aforementioned PCR polycarbonate resin composition to a practical level, and they remain insufficient to meet the diverse demands of the market.

Here, in order to enhance the performance of the PCR polycarbonate resin composition to a practical level, it is also conceivable to incorporate a halogen-based flame retardant, which has a strong effect and is widely known. However, since the halogen-based flame retardant is mainly a bromine-based flame retardant, there has been a problem of being environmentally unfriendly.

In view of the above, it is preferable that hazardous substances such as PTFEs and halogen-based flame retardants are not contained in the PCR polycarbonate resin composition from the viewpoint of environmental protection. However, as a raw material of the PCR polycarbonate resin composition, a product recovered from the market is used. Therefore, it is not practical to produce a PCR polycarbonate resin composition by setting the contents of PTFEs and halogen-based flame retardants widely used in products on the market to zero.

Therefore, there is a need for a PCR polycarbonate resin composition having high impact strength and excellent flame retardancy without substantially containing hazardous substances such as PTFEs and halogen-based flame retardants. Note that the term "without substantially containing hazardous substances" as used herein means that the amounts of a fluorine resin, bromine, and chlorine are each less than 1000 ppm.

The present disclosure has been made in view of the above problems and circumstances, and an object of the present disclosure is to provide a recycled resin composition, a resin molded product, a resin housing, and an electronic device that have high impact strength and excellent flame retardancy without substantially containing hazardous substances.

In order to solve the above-described problems, the present inventors have studied the causes and the like of the above-described problems. As a result, the present inventors have found that the above-described problems can be solved by containing a core-shell impact modifier that contains a silicone rubber in a PCR polycarbonate resin composition and setting the content of a fluorine resin in the PCR polycarbonate resin composition to less than 1000 ppm. These findings have led to the present disclosure.

That is, the above-described problems according to the present disclosure are solved by the following means. In the present specification, the "resin composition prepared using a PCR material containing a polycarbonate as a raw material", that is, the "PCR polycarbonate resin composition" is also simply referred to as a "recycled resin composition".
1. A recycled resin composition containing: a PCR material that contains a polycarbonate; and a core-shell impact modifier, wherein the core-shell impact modifier contains a silicone rubber, and a content of a fluorine resin in the recycled resin composition is less than 1000 ppm.
2. The recycled resin composition according to item 1, wherein a core of the core-shell impact modifier includes a silicone-acrylic composite rubber, and a shell of the core-shell impact modifier includes a resin having a structural unit derived from methyl methacrylate.
3. The recycled resin composition according to item 1, wherein a total content of the PCR material containing the polycarbonate and the core-shell impact modifier in the recycled resin composition is 50% by mass or more, and a content ratio of the PCR material containing the polycarbonate to the core-shell impact modifier is in a range of 88:12 to 96:4.
4. The recycled resin composition according to item 1, wherein a total content of chlorine and bromine in the recycled resin composition is less than 1000 ppm.
5. A resin molded product comprising the recycled resin composition according to any one of items 1 to 4.
6. A resin housing comprising the resin molded product according to item 5.
7. An electronic device comprising the resin housing according to item 6.

The above-described means of the present disclosure can provide a recycled resin composition, a resin molded product, a resin housing, and an electronic device that have high impact strength and excellent flame retardancy without substantially containing hazardous substances.

Although the realization mechanism or action mechanism of the effects of the present disclosure is not clear, the present inventors infer the mechanism as follows.

The recycled resin composition according to the present disclosure is a recycled resin composition that includes: a PCR material containing a polycarbonate; and a core-shell impact modifier, wherein the core-shell impact modifier contains a silicone rubber, and the content of a fluorine resin in the recycled resin composition is less than 1000 ppm.

A PCR material containing a polycarbonate is widely used as a product recovered in the market, and production of a recycled resin composition using the PCR material as a raw material is an important perspective from the viewpoint of environmental protection. The recycled resin composition according to the present disclosure has excellent flame retardancy even when the PCR material containing a polycarbonate having a fluorine resin content of less than 1000 ppm is used as a raw material.

Furthermore, since the recycled resin composition contains the core-shell impact modifier containing a silicone rubber, the recycled resin composition has high impact strength.

### DETAILED DESCRIPTION

Hereinafter, the present invention, constituent elements thereof, and forms and aspects for carrying out the present invention will be described in detail. In the present description, when two numbers are used to indicate a range of value before and after "to", these numbers are included in the range as the lower limit value and the upper limit value.

Note that the advantages and features provided by one or more embodiments of the present disclosure will be more fully understood from the following detailed description, which is not intended to define the limitations of the present disclosure.

### 1. Recycled Resin Composition

A recycled resin composition according to the present disclosure contains a PCR material containing a polycarbonate, and a core-shell impact modifier. The core-shell impact modifier contains a silicone rubber, and the content of a fluorine resin is less than 1000 ppm.

### (1.1) Contained Substances

### (PCR Material containing Polycarbonate)

The "PCR material containing a polycarbonate" according to the present disclosure is a raw material of the recycled resin composition according to the present disclosure and is a market-recovered resin recovered from a molded product using the polycarbonate as a base material. In general, the market-recovered resin includes a resin other than the polycarbonate, and strictly speaking, the PCR material containing a polycarbonate also includes a material that is not a resin.

The content of the polycarbonate in the PCR material according to the present disclosure is not particularly limited, provided that the polycarbonate is contained as the main component.

Here, a "virgin polycarbonate" in the present specification is a polycarbonate material before being formed into a molded product and is a polycarbonate that is not a market-recovered resin. The virgin polycarbonate itself is usually sold as pellets with a composition of virgin polycarbonate only. Further, pellets of virgin polycarbonate resin composition to which additives such as a color material, an antioxidant, and a flame retardant are added are also sold. These pellets are put into a molding machine to prepare a resin molded product.

The content of the polycarbonate in the virgin polycarbonate resin composition is not particularly limited, provided that the polycarbonate is contained as the main component.

Although the virgin polycarbonate is a resin with excellent initial performance in terms of impact resistance, the virgin polycarbonate has also poor flowability and is prone to hydrolysis, making it a material that deteriorates rapidly. The virgin polycarbonate alone can exhibit flame retardancy of about V-2. However, in order to increase the flame retardancy to V-0, it is necessary to contain PTFE or a flame retardant containing a hazardous substance.

However, since the recycled resin composition according to the present disclosure does not contain the virgin polycarbonate but contains the PCR material containing a polycarbonate, the flame retardancy can be improved to V-0 without containing PTFE or a flame retardant. Further, the impact strength is improved by containing the core-shell impact modifier containing a silicone rubber in the recycled resin composition.

Further, when PTFE or a flame retardant containing a hazardous substance is not used, it can be said that the recycled resin composition according to the present disclosure containing the PCR material containing a polycarbonate is more excellent in flame retardancy than a resin composition containing the virgin polycarbonate.

The impact strength of the resin composition based on the PCR material and the impact strength of the resin composition based on the virgin polycarbonate differ depending on the required grade of the resin composition and cannot be determined uniformly.

For example, in the resin composition based on the PCR material, the impact strength increases compared to the resin composition based on the virgin polycarbonate. Therefore, it is possible to adjust the impact strength to achieve the impact strength required for the above grade, ensuring a practical level of impact strength.

Furthermore, in the resin composition based on the virgin polycarbonate, particularly when a virgin polycarbonate having a high impact strength is used, adding the aforementioned core-shell impact modifier may actually reduce the impact strength. However, this reduction can be limited to a range that is not problematic for practical applications.

In the recycled resin composition, the total content of the PCR material containing the polycarbonate and the core-shell impact modifier is preferably 50% by mass or more, and the content ratio of the PCR material containing the polycarbonate and the core-shell impact modifier is preferably in a range of 88:12 to 96:4.

This results in higher impact strength and better flame retardancy.

### (Core-shell Impact Modifier)

Generally, an impact modifier used in combination with a flame retardant has a core-shell structure from the viewpoint of dispersibility of the impact modifier during production.

The core-shell impact modifier is not particularly limited but is preferably a core-shell elastomer. One type of the core-shell impact modifier may be used alone, or two or more types may be used in combination. By using the core-shell elastomer, the impact strength is further increased. The effects of external impacts such as bending and impact in actual use can be alleviated, resulting in good reliability in long-term use.

The elastomer may be a styrene-based elastomer. Examples of the styrene-based elastomer include block copolymers of styrene components with butadiene, isoprene, 1,3-pentadiene, or the like. In addition, a modified product thereof, a hydrogenated product thereof, or the like may be used. More specifically, SBS, SIS, SEBS, SEPS, and the like are exemplified.

The elastomer may be other than the styrene-based elastomer. Examples of the elastomer other than the styrene-based elastomer include a polyester-based elastomer, a polyolefin-based elastomer, a diene-based elastomer, and an acrylic-based elastomer. In addition, known elastomers such as a polyamide-based elastomer, a polyurethane-based elastomer, a fluorine-based elastomer, and a silicone-based elastomer are exemplified.

The elastomer is generally a thermoplastic elastomer. The elastomer is preferably the polyester-based elastomer or the above-described styrene-based elastomer.

The core-shell elastomer includes an innermost layer (i.e., core) and one or more outer layers (i.e., shells) covering the core. The core-shell elastomer is preferably a core-shell graft copolymer in which a monomer component graft-copolymerizable with the core is graft copolymerized as a shell.

The core-shell graft copolymer usually has a polymer component called a rubber component as the core. In the core-shell graft copolymer, it is preferable that a polymer component constituting the core and a monomer component as the shell copolymerizable with the polymer component are graft copolymerized with each other.

Examples of the polymer component constituting the core include: butadiene-based rubbers such as polybutadiene and styrene-butadiene copolymers; isoprene-based rubbers; acrylic rubbers such as polybutyl acrylate, poly(2-ethylhexyl acrylate), and butyl acrylate-2-ethylhexyl acrylate copolymers; silicone-based rubbers such as polyorganosiloxane rubbers; butadiene-acrylic composite rubbers; silicone-acrylic composite rubbers such as IPN (Interpenetrating Polymer Network)-type composite rubbers that include a polyorganosiloxane rubber and a polyalkyl acrylate rubber; ethylene-α-olefin-based rubbers such as ethylene-propylene copolymers, ethylene-butene copolymers, and ethylene-octene copolymers; ethylene-acrylic rubbers; and fluorine rubbers. These may be used alone or in combination of two or more kinds thereof.

Among these, from the viewpoints of mechanical properties and surface appearance, at least one selected from the butadiene-based rubber, acrylic-based rubber, silicone-based rubber, and silicone-acrylic composite rubber is preferable, and the silicone-acrylic composite rubber is more preferable among these.

Since the core-shell impact modifier according to the present disclosure contains a silicone rubber, it is expected that the flame retardancy and the slidability of the silicone material are reflected, thereby improving the flame retardancy and the moldability of the resin composition.

Examples of the monomer component that constitutes the shell and is graft-copolymerizable with the polymer component as the core include aromatic vinyl compounds; vinyl cyanide compounds; (meth)acrylic compounds such as (meth)acrylic acid ester compounds, (meth)acrylic acid compounds, and epoxy group-containing (meth)acrylic acid ester compounds such as glycidyl (meth)acrylate; maleimide compounds such as maleimide, N-methylmaleimide and N-phenylmaleimide; and α,β-unsaturated carboxylic acid compounds such as maleic acid, phthalic acid and itaconic acid, and anhydrides thereof (e.g., maleic anhydride). These monomer components may be used alone or in combination of two or more kinds thereof.

Among these, from the viewpoints of mechanical properties and surface appearance, the aromatic vinyl compounds, vinyl cyanide compounds, and (meth)acrylic compounds are preferable. More preferably, the aromatic vinyl compounds and (meth)acrylic compounds are preferable, and among these, the (meth)acrylic acid ester compounds are preferable.

Examples of the aromatic vinyl compounds include styrene, α-methylstyrene, 1-vinylnaphthalene, 4-methylstyrene, 4-propylstyrene, 4-cyclohexylstyrene, and 4-dodecylstyrene. Other examples include 2-ethyl-4-benzylstyrene, 4-(phenylbutyl) styrene, and halogenated styrene. Among these, the styrene or α-methylstyrene is more preferable.

Examples of the (meth)acrylic acid ester compounds include methyl (meth)acrylate, ethyl (meth)acrylate, butyl (meth)acrylate, cyclohexyl (meth)acrylate, and octyl (meth)acrylate. Among these, the methyl (meth)acrylate and ethyl (meth)acrylate, which are relatively easily available, are preferable, and the methyl (meth)acrylate is more preferable. The term "(meth)acrylic" is a generic term for "acrylic" and "methacrylic".

The core of the core-shell elastomer includes preferably at least one polymer component selected from the butadiene-based rubber, acrylic rubber, silicone-based rubber, and silicone-acrylic composite rubber. A core-shell graft copolymer constituted by a shell formed by graft copolymerizing a (meth)acrylic compound such as a (meth)acrylic acid ester and/or an aromatic vinyl compound around the aforementioned core of the core-shell elastomer is particularly preferable.

The content of the polymer component in the core of the core-shell graft copolymer is preferably 40% by mass or more.

The total content of the (meth)acrylic compound component and the aromatic vinyl compound component in the shell of the core-shell graft copolymer is preferably 30% by mass or more. Among the (meth)acrylic compounds, (meth)acrylic acid esters are particularly preferable.

In the shell, any one of a (meth)acrylic compound and an aromatic vinyl compound may be used alone, or these may be used in combination.

In light of the above, the core of the core-shell impact modifier according to the present disclosure includes preferably the silicone-acrylic composite rubber, which increases the impact strength of the recycled resin composition. Furthermore, the shell of the core-shell impact modifier preferably includes a resin having a structural unit derived from methyl methacrylate.

Preferable examples of the core-shell elastomer include a methyl methacrylate-butadiene-styrene copolymer (MBS), a methyl methacrylate-acrylonitrile-butadiene-styrene copolymer (MABS), a methyl methacrylate-butadiene copolymer (MB), a methyl methacrylate-acrylic rubber copolymer (MA), a methyl methacrylate-acrylic rubber-styrene copolymer (MAS), a methyl methacrylate-acrylic-butadiene rubber copolymer, a methyl methacrylate-acrylic-butadiene rubber-styrene copolymer, and a methyl methacrylate-(silicone-acrylic composite rubber) copolymer.

The content of the core-shell impact modifier in the recycled resin composition is preferably in a range of 4 to 12% by mass from the viewpoint of achieving the effects of the present disclosure.

### (Hazardous Substances)

It is preferable that the recycled resin composition according to the present disclosure does not contain hazardous substances. Specifically, it is only required that the content of a fluorine resin in the recycled resin composition is less than 1000 ppm. In addition, the total content of chloride and bromine in the recycled resin composition is preferably less than 1000 ppm.

The amount of the hazardous substances contained in the recycled resin composition according to the present disclosure depends on the amount used in the PCR material recovered in the market. The amount can be controlled to a certain extent by limiting the type of recovered material or by screening based on inspections by a fluorescent X-ray analyzer or the like.

### (Others)

The recycled resin composition may contain a flame retardant, other additives, and the like as long as the effects of the present disclosure are not impaired, and as these, various known ones can be used.

When the total content of the PCR material containing the polycarbonate and the core-shell impact modifier in the recycled resin composition according to the present disclosure is 50% by mass or more, and the content ratio of the PCR material containing the polycarbonate to the core-shell impact modifier is in the range of 88:12 to 96:4, the effects of the present disclosure are further enhanced. Thus, the recycled resin composition has a sufficient impact strength as a housing component of an electronic device and is excellent in flame retardancy.

### (1.2) Method for Analyzing Contained Substances

The content of the recycled resin composition can be analyzed by various known methods. Examples of the known methods include wavelength dispersive X-ray spectroscopy (WDX), energy dispersive X-ray spectroscopy (EDS), infrared spectroscopy (IR), and nuclear magnetic resonance spectroscopy (NMR).

Note that the above-described core-shell impact modifier containing the silicone rubber is detected as a rubbery polymer whose main component is a composite rubber including a silicone rubber component when the material is analyzed. In addition, whether the PCR material containing the polycarbonate is used in the recycled resin composition according to the present disclosure can be easily verified through published data from a manufacturer that actually manufactured the material to be used.

### 2. Resin Molded Product

A resin molded product according to the present disclosure is molded using the recycled resin composition. Since the resin molded product is formed using the recycled resin composition, high impact strength and excellent flame retardancy can be imparted to the resin molded product.

The recycled resin composition according to the present disclosure contains the polycarbonate, which is a thermoplastic resin. A thermoplastic resin can be molded into a desired shape using a known injection molding machine or the like and can be easily handled. Therefore, the resin molded product can be used as a housing or a component in an electronic device or the like by molding the resin molded product into an appropriate form and shape.

As a method for molding the resin molded product according to the present disclosure, various known methods can be appropriately selected depending on the form and use of the molded product. Examples of the molding method include a method for melting the recycled resin composition in various molding machines and molding the resin.

As a preferable method for adding or homogenizing an additive to the recycled resin composition to obtain a suitable molding raw material, for example, a melt-kneading method is exemplified. Examples of the melt-kneading method include a method in which a resin, polysaccharide-containing nanoparticles, and other additives are preliminarily mixed using various mixers such as a tumbler and a high-speed mixer known as a Henschel mixer, and then the mixture is melt-kneaded using a kneading apparatus such as a Banbury mixer, a roll, a plastograph, a single-screw extruder, a twin-screw extruder, or a kneader.

Among these, from the viewpoint of production efficiency, an extruder is preferably used, and the twin-screw extruder is more preferably used. The materials can be melt-kneaded using the extruder, the kneaded product can be extruded into strands, and then the kneaded product can be processed into pellets.

Note that it is preferable to sufficiently dry the materials before performing the preliminary mixing in which the materials are mixed in advance. The drying temperature is not particularly limited but is preferably in a range of 60 to 120 °C. The drying time is not particularly limited but is preferably in a range of 2 to 6 hours. In addition, from the viewpoint of facilitating drying, it is preferable to dry under reduced pressure. The drying may be performed after the preliminary mixing.

The temperature of the melt-kneading is not particularly limited. However, it is preferable to appropriately select the temperature according to the type of the resin used and the like. Specifically, the temperature is preferably in a range of 150 to 280°C. Here, the temperature of the melt-kneading corresponds to, for example, the cylinder temperature in the kneading apparatus such as a twin-screw extruder. When a plurality of temperature settings is made in a cylinder of the kneading apparatus, the cylinder temperature refers to the temperature of a portion of the cylinder that has the highest temperature. The kneading pressure is not particularly limited but is preferably in a range of 1 to 20 MPa.

The ejection amount from the kneading apparatus greatly varies depending on the size of the kneader to be used, the composition of the kneaded materials, and the like. For example, for a laboratory machine of the minimum class, the ejection amount is 100 g to 1 kg/hr, and for a laboratory machine of the larger class, the ejection amount is 200 to 500 kg/hr.

The kneaded product melt-kneaded by the kneading apparatus in the above method is preferably subjected to a cooling treatment after being extruded from the kneading apparatus. The method of the cooling treatment is not particularly limited. Examples of the method include a method for water-cooling the kneaded product by immersing the kneaded product in water in a range of 0 to 60°C, a method for cooling the kneaded product with a gas in a range of -40 to 60°C, and a method for bringing the kneaded product into contact with a metal in a range of -40 to 60°C.

The form and shape of the recycled resin composition according to the present disclosure are not particularly limited and may be, for example, a solid such as a powder, a granule, a tablet, a pellet, a flake, or a fiber, or a liquid.

The resin molded product is not particularly limited. Examples of the resin molded product include components in the fields of home appliances, automobiles, and the like (e.g., electrical and electronic components, electrical equipment components, exterior components, and interior components), various packaging materials, household goods, office supplies, piping, and agricultural materials.

### 3. Resin Housing and Electronic Device

A resin housing according to the present disclosure includes the resin molded product described above. In addition, an electronic device according to the present disclosure includes the resin molded product described above. That is, in an electronic device or the like, the above-described resin molded product may be used as a housing for housing the electronic device or used as a component. Note that in the present disclosure, the "electronic device" refers to an electric product to which the technology of electronics is applied.

The item to be housed in the resin housing according to the present disclosure is not particularly limited. However, it is preferable to house an electronic device or the like. In addition, the resin housing according to the present disclosure can also be applied to a housing that is generally preferably manufactured from a flame-retardant resin.

The electronic device is not particularly limited. Examples of the electronic device include a computer, a scanner, a copier, a printer, a facsimile apparatus, an OA apparatus such as a multifunction peripheral (MFP) having these functions, and a digital printing system for commercial printing.

### [Examples]

Hereinafter, the present disclosure will be specifically described with reference to examples, but the present disclosure is not limited thereto. In the examples, "part(s)" or "%" means "part(s) by mass" or "% by mass" unless otherwise specified.

### A. Preparation of Resin Composition

### (A.1) Resin Composition [1]

As the raw material, a PCR material in the form of pellets was dried at 120°C for 2 hours to prepare a PCR material [1]. Note that the PCR material [1] was derived from an optical disc containing polycarbonate.

The PCR material [1] and a core-shell impact modifier "METABLEN SX-005" manufactured by Mitsubishi Chemical Corp. were dry-blended, charged into a twin-screw kneader, and melt-kneaded under conditions of 240°C and 400 rpm. The weight ratio of the PCR material [1] to the core-shell impact modifier was 96:4.

The above "METABLEN SX-005" is a core-shell impact modifier in which the core includes a silicone-acrylic composite rubber and the shell includes a resin having a structural unit derived from methyl methacrylate.

Thus, a strand [1] of molten resin was prepared.

The strand [1] was cooled and then passed through a pelletizer to prepare a resin composition [1], which is a resin composition pellet.

### (A.2) Resin Composition [2]

The raw material and the core-shell impact modifier used were the same as those of the resin composition [1], and these were dry-blended, charged into a twin-screw kneader, and melt-kneaded under the conditions of 240°C and 400 rpm. However, the weight ratio of the PCR material [1] to the core-shell impact modifier was 93:7.

Thus, a strand [2] of molten resin was prepared.

The strand [2] was cooled and then passed through a pelletizer to prepare a resin composition [2], which is a resin composition pellet.

### (A.3) Resin Composition [3]

The raw material and the core-shell impact modifier used were the same as those of the resin composition [1], and these were dry-blended, charged into a twin-screw kneader, and melt-kneaded under the conditions of 240°C and 400 rpm. However, the weight ratio of the PCR material [1] to the core-shell impact modifier was 88:12.

Thus, a strand [3] of molten resin was prepared.

The strand [3] was cooled and then passed through a pelletizer to prepare a resin composition [3], which is a resin composition pellet.

### (A.4) Resin Composition [4]

As the raw material, a virgin material containing pellets of polycarbonate was dried at 120°C for 2 hours to prepare a virgin material [1].

The virgin material [1] and a core-shell impact modifier "METABLEN SX-005" manufactured by Mitsubishi Chemical Corp. were dry-blended, charged into a twin-screw kneader, and melt-kneaded under the conditions of 240°C and 400 rpm. The weight ratio of the virgin material [1] to the core-shell impact modifier was 96:4.

Thus, a strand [4] of molten resin was prepared.

The strand [4] was cooled and then passed through a pelletizer to prepare a resin composition [4], which is a resin composition pellet.

### (A.5) Resin Composition [5]

The raw material and the core-shell impact modifier used were the same as those of the resin composition [4], and these were dry-blended, charged into a twin-screw kneader, and melt-kneaded under the conditions of 240°C and 400 rpm. However, the weight ratio of the virgin material [1] to the core-shell impact modifier was 88:12.

Thus, a strand [5] of molten resin was prepared.

The strand [5] was cooled and then passed through a pelletizer to prepare a resin composition [5], which is a resin composition pellet.

### (A.6) Resin Composition [6]

The PCR material [1] was charged into a twin-screw kneader and melt-kneaded under the conditions of 240°C and 400 rpm.

Thus, a strand [6] of molten resin was prepared.

The strand [6] was cooled and then passed through a pelletizer to prepare a resin composition [6], which is a resin composition pellet.

### (A.7) Resin Composition [7]

The virgin material [1] was charged into a twin-screw kneader and melt-kneaded under the conditions of 240°C and 400 rpm.

Thus, a strand [7] of molten resin was prepared.

The strand [7] was cooled and then passed through a pelletizer to prepare a resin composition [7], which is a resin composition pellet.

### B. Evaluation and Determination of Flame Retardancy

The flame retardancy was evaluated by conducting the UL 94V test. The "UL 94 test" is a flammability test for plastic materials used in equipment components, as specified by Underwriters Laboratories (UL) in the United States. The "UL 94V test" is a test for evaluating the flame retardancy based on the residual burning time and dripping properties after exposing a vertically held test piece of a predetermined size to a burner flame for 10 seconds.

Specifically, each resin composition was dried at 80°C for 4 hours and then molded into a strip-shaped test piece of 125 mm × 13 mm × 2.4 mm using an injection molding machine "J55ELII" manufactured by The Japan Steel Works, Ltd. at a cylinder temperature of 280°C and a mold temperature of 80°C. The strip-shaped test pieces of the respective resin compositions [1] to [7] thus molded were referred to as UL flammability test pieces [1] to [7].

The UL flammability test pieces of the molded resin compositions were humidified in a thermostatic chamber having a temperature of 23°C and a humidity of 50% for 48 hours. The flame retardancy was evaluated in accordance with the UL 94 test, and each UL flammability test piece was determined to be V-0, V-1, or V-2 based on its flammability behavior.

### C. Evaluation of Impact Strength

Each resin composition was pre-dried at 120°C for 2 hours and then put into an injection molding machine to prepare a notched Charpy impact test piece of 80 mm × 10 mm × 4 mm in accordance with JIS K 7111-1 (ISO 179-1). The impact test pieces prepared using the resin compositions [1] to [7] were referred to as Charpy impact test pieces [1] to [7].

The impact strength of each of the Charpy impact test pieces [1] to [7] was calculated by performing a notched Charpy impact test and evaluated according to the following evaluation criteria.

### (Evaluation Criteria)

Pass (no practical problem): The impact strength is 15 kJ/m² or more.

Fail (practically problematic): The impact strength is less than 15 kJ/m².

### D. Detection of Hazardous Substances

In each resin composition, fluorine (F), bromine (Br), and chlorine (Cl) were detected by wavelength dispersive X-ray spectroscopy (WDX) using "ZSX Primus IV" manufactured by Rigaku Corporation. Note that since the WDX can detect about 200 ppm, when the aforementioned fluorine, bromine, and chlorine are not detected, it can be said that the contents of these elements are less than 1000 ppm. Since the WDX cannot detect elements less than 1000 ppm, when the aforementioned fluorine, bromine, and chlorine are not detected, it can be said that the contents of these elements are less than 1000 ppm.

### E. Summary

Table I summarizes the raw material, the impact modifier, the weight ratio of the raw material to the impact modifier, and the above evaluation results corresponding to each resin composition.

### [Table 1]

**TABLE I**

| RESIN COMPOSITION | | | | | EVALUATION | | | REMARKS |
|---|---|---|---|---|---|---|---|---|
| No. | RAW MATERIAL | IMPACT MODIFIER | | WEIGHT RATIO *1 | FLAME RETARDANCY | IMPACT STRENGTH | DETECTION OF F, Br, Cl | |
| | | CORE | SHELL | | | | | |
| (1) | PCR MATERIAL [1] (CONTAINING PC) | Si-Ac COMPOSITE RUBBER | MMA-DERIVED | 96:4 | V-0 | PASS | UNDETECTED | EXAMPLE |
| (2) | PCR MATERIAL [1] (CONTAINING PC) | Si-Ac COMPOSITE RUBBER | MMA-DERIVED | 93:7 | V-0 | PASS | UNDETECTED | EXAMPLE |
| [3] | PCR MATERIAL [1] (CONTAINING PC) | Si-Ac COMPOSITE RUBBER | MMA-DERIVED | 88:12 | V-0 | PASS | UNDETECTED | EXAMPLE |
| [4] | VIRGIN MATERIAL [1] (CONTAINING PC) | Si-Ac COMPOSITE RUBBER | MMA-DERIVED | 96:4 | V-2 | PASS | UNDETECTED | COMPARATIVE EXAMPLE |
| (5) | VIRGIN MATERIAL [1] (CONTAINING PC) | Si-Ac COMPOSITE RUBBER | MMA-DERIVED | 88:12 | V-2 | PASS | UNDETECTED | COMPARATIVE EXAMPLE |
| [6] | PCR MATERIAL [1] (CONTAINING PC) | - | - | - | V-2 | FAIL | UNDETECTED | COMPARATIVE EXAMPLE |
| (7) | VIRGIN MATERIAL [1] (CONTAINING PC) | - | - | - | V-2 | PASS | UNDETECTED | COMPARATIVE EXAMPLE |

| | | | | | | | | |
|---|---|---|---|---|---|---|---|---|
| * 1: The weight ratio is the weight ratio of the raw material to the impact modifier. In the table, "PC" represents polycarbonate. In the table, "Si-Ac" represents silicone acrylic and "MMA" represents methyl methacrylate. In the table, "F" represents fluorine, "Br" represents bromine, and "Cl" represents chlorine. | | | | | | | | |

From the results shown in Table I above, it is found that the resin composition using the PCR material containing the polycarbonate according to the present disclosure as the raw material, that is, the recycled resin composition, is more excellent in flame retardancy than the resin composition using the virgin polycarbonate as the raw material.

Specifically, when the core-shell impact modifier containing the silicone rubber is contained, the resin composition using the virgin polycarbonate as the raw material meets only the V-2 standard in the evaluation of flame retardancy. On the other hand, it is found that when the core-shell impact modifier containing the silicone rubber is contained, the resin composition using the PCR material containing the polycarbonate according to the present disclosure as the raw material, that is, the recycled resin composition meets the V-0 standard in the evaluation of flame retardancy.

In addition, it is found that the recycled resin composition containing the core-shell impact modifier containing the silicone rubber has an impact strength that does not cause a practical problem.

Although embodiments of the present invention have been described and illustrated in detail, the disclosed embodiments are made for purposes of illustration and example only and not limitation. The scope of the present invention should be interpreted by terms of the appended claims.

## Claims

1. A recycled resin composition containing:
a PCR material that contains a polycarbonate; and
a core-shell impact modifier, wherein
the core-shell impact modifier contains a silicone rubber, and
a content of a fluorine resin in the recycled resin composition is less than 1000 ppm.

2. The recycled resin composition according to claim 1, wherein
a core of the core-shell impact modifier includes a silicone-acrylic composite rubber, and
a shell of the core-shell impact modifier includes a resin having a structural unit derived from methyl methacrylate.

3. The recycled resin composition according to claim 1, wherein
a total content of the PCR material containing the polycarbonate and the core-shell impact modifier in the recycled resin composition is 50% by mass or more, and
a content ratio of the PCR material containing the polycarbonate to the core-shell impact modifier is in a range of 88:12 to 96:4.

4. The recycled resin composition according to claim 1, wherein a total content of chlorine and bromine in the recycled resin composition is less than 1000 ppm.

5. A resin molded product comprising the recycled resin composition according to any one of claims 1 to 4.

6. A resin housing comprising the resin molded product according to claim 5.

7. An electronic device comprising the resin housing according to claim 6.
